Europäisches Patentamt

European Patent Office

Office européen des brevets

(11) Publication number: **0 272 758 B1**

(12) **EUROPEAN PATENT SPECIFICATION**

(45) Date of publication of patent specification: **08.07.92**   (51) Int. Cl.⁵: **G01F 1/84**

(21) Application number: **87202573.9**

(22) Date of filing: **18.12.87**

(54) Improved process for the measurement of weight flowrates and related devices.

(30) Priority: **23.12.86 IT 2281386**

(43) Date of publication of application:
**29.06.88 Bulletin 88/26**

(45) Publication of the grant of the patent:
**08.07.92 Bulletin 92/28**

(84) Designated Contracting States:
**DE FR GB NL SE**

(56) References cited:
**EP-A- 0 196 150**
**US-A- 3 329 019**
**US-A- 3 355 944**
**US-A- 4 127 028**

**PATENT ABSTRACTS OF JAPAN, vol. 11, no. 147 (P-575)[2594], 14th May 1987; & JP-A-61 283 827**

(73) Proprietor: **NUOVO PIGNONE-Industrie Meccaniche e Fonderia S.p.A.**
**Via F. Matteucci 2**
**I-50127 Florence(IT)**

(72) Inventor: **Bergamini, Giorgio**
**Via C. Rosalba 46/f Parco Domingo**
**I-70124 Bari(IT)**
Inventor: **Campanale, Nicola**
**Via V. Mastrocco 25**
**I-70021 Acquaviva Delle Fonti Bari(IT)**
Inventor: **Cocozza, Onofrio**
**Via Amendola 69**
**I-70126 Bari(IT)**

(74) Representative: **Roggero, Sergio et al**
**Ing. Barzanò & Zanardo Milano S.p.A. Via Borgonuovo 10**
**I-20121 Milano(IT)**

Rank Xerox (UK) Business Services

## Description

The present invention is concerned with a new measurement process which, by introducing a linear relationship between the weight (i.e. mass) flow-rate of a fluid outflowing through an oscillating pipe, and the considerable difference in amplitude between the oscillations of the ends of said pipe, caused by the twisting deformation of the tube due to the Coriolis effect, makes it possible an efficacious, easy and precise measurement of the above said weight flow-rate to be achieved, even in case of extremely small flow-rates; furthermore, by making it possible the amplitude of the flexural oscillation of the pipe to be reduced, the present invention minimizes the mechanical stress undergone by said pipe, whilst the large magnitude of the produced twisting excursions makes the pipe particularly insensitive to the seismic disturbances.

The invention is also concerned with the devices for practicing the above said measurement process.

From the prior art, process and devices are already well known, for determining the weight flow-rate of an outflowing fluid inside a duct or pipe, which is angularly revolved in a reciprocating mode, by measuring the twisting moment generated by the Coriolis forces, starting from the ancient devices for mass flow-rate measurement of gyroscopic type, which are precisely based on the measurement of the Coriolis forces.

The first device the present invention can be more directly related to, was patented in 1964 by A.J. Sipin (U.S. patent No. 3,355,944 issued in 1969), and consists of a pipe to which a portal shape is given, reciprocated around an axis coincident with the alignment of the input and output ends of the pipe, and provided with strain-gauge type means for measuring the deformations caused by the Coriolis forces.

The above said motion is achieved both by means of a motor, and by means of an electromagnet, and the amplitude of the oscillations is kept controlled (cfr. claim 5) by controlling the average amplitude of two speed signals obtained by means of two sensors of electromagnetic type provided along the sides of the portal, whilst the measurement of the flow-rate is derived from the difference between these two signals. In said patent, it is also claimed (see specifically claim 10) that the frequency of oscillation is the resonance frequency of the system.

Also in 1964, same A.J. Sipin patented (U.S. patent No. 3,329,019, issued in 1967) also a completely rectilinear geometry of the pipe, made laterally oscillate by the same means, and with the same amplitude control as of the prior case, i.e., carried out by means of two speed sensors located on one side, and on the other side, relatively to the middle point of the pipe. Also in this practical embodiment, the operation at the frequency of resonance of the system is considered (see claim 6).

The reasons why the above said devices did not function in practice are the substantially extremely low values of the Coriolis forces, and of the relevant deformations both relatively to the impulse forces applied to make pipe oscillate, and to the frictions of the mechanisms and of the couplings. Then, there is the mistake, or, better, the inexactness of deriving the flow-rate signal by starting from the difference between two speed signals, when, on the contrary, the flow-rate signal can be correctly deduced only from the phase difference between the two speed signals, whose amplitude remains constant under all normal conditions, except for a very special condition, which is, precisely, the object of the present invention.

In fact, at the flexural resonance frequency, the flexural impulse force of the pipe produces a shift of the same pipe in quadrature relatively to the same force; on the other hand, the Coriolis force, always in quadrature relatively to the above said flexural shift, produces, in its tun, a twisting shift in the tube, which is in phase with the same force, with the oscillation frequency being smaller than the twisting resonance frequency, and is therefore in quadrature relatively to the twisting shift of the pipe; the end shift of the pipe, which is the vectorial sum of the two shifts in quadrature relatively to each other, will therefore show, relatively to the twisting shift of the pipe, a phase difference, to the determination of which the measurement of the weight flow-rate has to be reconducted.

In order to obviate the above-said functional limits, improving variants have been developed, which led to the realization of commercial products.

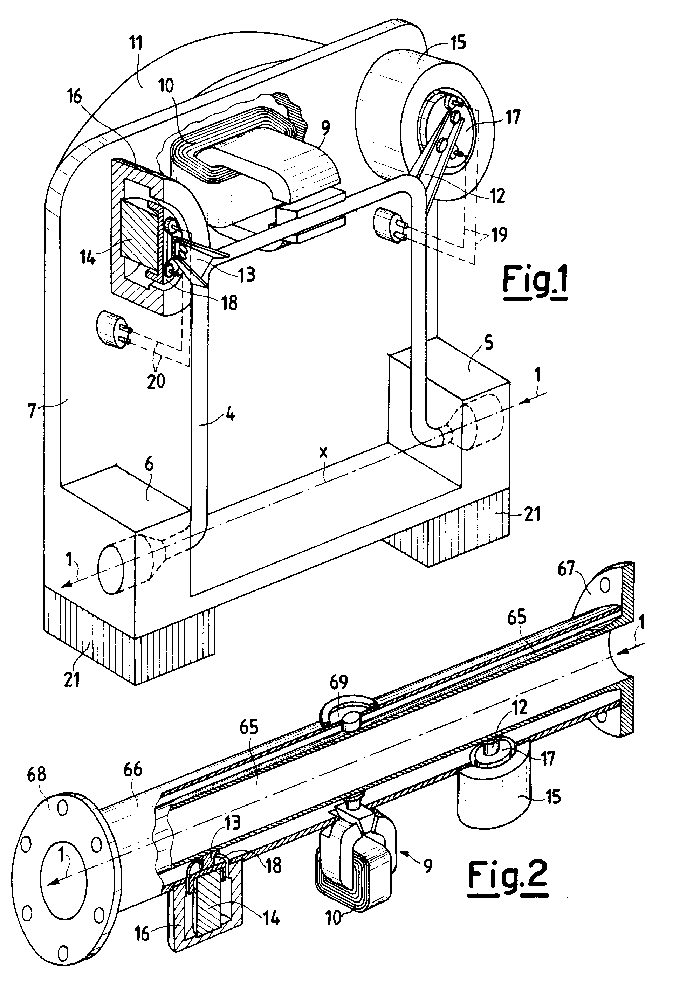

The first patent which supplies a solution for the Sipin's concept is by Bruce M. Cox (U.S. patent No. 4,127,028, issued in 1978), which identifies, first of all, that the value of the weight flow-rate is defined by the phase delay between the two signals obtained from the two sensors, and not by a difference in their amplitude (see, on this point, Figure 2 of said U.S. patent), and furthermore increases the signal/noise ratio by giving the pipe a racket shape, such to decrease the twisting stiffness, with the result that, by lowering the frequency of twisting resonance until it becomes close to the flexural resonance frequency, the small Coriolis forces can generate larger deformations, thanks to the smaller twisting stiffness of the system. Then Cox couples two equal pipes, through which a same fluid flows, and makes them vibrate in mutually opposite mode, such to prevent interactions of vibrations with the supports of the device, in order to reduce the vibration energy and to improve the precision, in as much as the signal is doubled, and furthermore the system becomes less sensitive to the external vibrations.

The main limit affecting the Cox device is that, by approaching the frequency of twisting resonance to the own frequency of flexural or longitudinal resonance, or making said frequency of twisting resonance coincide with said own frequency of flexural or longitudinal resonance, and hence approaching the frequency of oscillation of the system to the twisting resonance frequency, it's true that an increase in sensitivity is obtained, but the relationship between the angles of phase displacement, and the Coriolis forces does no longer result linear, and this phenomenon the more relevant, the more the vibration coincides with the twisting resonance frequency in correspondence of which the maximum in sensitivity occurs.

Under these conditions, both the small Coriolis forces, and small unsymmetries cause an increasingly larger twisting oscillation, whose effect is that the Coriolis forces are magnified in their turn, whilst the end equilibrium under resonance conditions is obtained with the dispersion of both aerodynamic energy, which varies according to a square law, as a function of the shifts, and mechanical energy, with pipe hysteresis cycles, which also result in risks of fatigue breakages.

On the other side, under the conditions of twisting resonance, besides the non-linearity, also a phase shift occurs between the movement phase and the phase of the Coriolis forces. In fact, the twisting deformations due to the Coriolis forces, from being in phase with said forces, shift in phase, up to reach a phase advance of 90°, so that the amplitudes of the two signals become different, and their phase delay decreases down to zero. But, in as much as Cox uses as the signal the difference in phase between the two movements, of equal amplitude, of the position sensors installed on the pipes, as it can also be clearly deduced from Figure 2 of above U.S. patent, it is consequently clear that Cox device shall vibrate at frequencies which are relatively far away from the twisting resonance, and therefore the actual extremely large potential amplification is not taken advantage of, as it can be obtained, on the contrary, by operating at a frequency precisely equal to the twisting resonance frequency.

Another practical embodiment disclosed in U.S. patent No. 4,187,721 issued in 1980 to James E. Smith, functionally improves the invention disclosed by Sipin.

In said patent, Smith states the need of making a U-shaped pipe operate exactly, end only, at the flexural resonance frequency, because at this frequency only, the forces necessary to supply the impulse force to the pipe are so small, as not to interfere with the extremely small Coriolis forces, and furthermore he states that the own flexural resonance frequency must be smaller that the twisting resonance frequency, precisely in order to prevent the operating anomalies, as described above in connection with Cox patent, from occurring.

With the contrivances by Smith, the measured value results to be a really well linear function of the flow-rate, but the limit anyway remains, that signals of infinitesimal magnitude have to be processed, which require an extremely sophisticated electronics, anyway with problems of stability of the meaured values, in the nearby of zero flow-rates, and with problems of disturbances of seismic type.

The purpose of the present invention is precisely obviating the above-said drawbacks, and therefore providing a process, and a corresponding device, which make it possible the weight flow-rate to be efficaciously measured through the effects of the Coriolis forces, with the possibility being exploited as extensively as possible, of having very large signals by making the system oscillate exactly at the twisting resonance frequency, without this latter having to necessarily coincide with the own flexural oscillation frequency of the system.

Accordingly, the present invention provides, according to one of its two main aspects,

A method of measuring the mass flow rate of a fluid by use of the Coriolis force, comprising:

- passing said fluid through at least one pipe, which is fastened at its ends to a support,
- oscillating said pipe substantially at its resonant frequency of twisting vibration by means of electromagnetic force-generating means at a point midway along its length,
- sensing displacements of said pipe using respective sensing means, spaced on either side of electromagnetic means between said means and the ends of the pipe, to develop sensing signals whose amplitude represent the respective displacements, and
- deriving a difference signal representing the difference between said sensing signals and using it to determine the twisting moment caused by Coriolis forces acting on said pipe and the flowing fluid therein, in order to provide an output signal representative of the mass flow of said fluid through said pipe, wherein
- the difference signal is used to control the signal applied to the electromagnetic force-generating means, characterised by:
- applying said difference signal to a filter circuit to provide an average thereof over a certain time interval and thereby remove disturbances due to supply variations, seismic disturbances, or misalign-

3

ment of the apparatus,

- searching for, and maintaining, said twisting resonance frequency, by varying the oscillation frequency in steps and detecting the maximum value of the average difference signal occuring during said variation
- applying a braking force to the pipe at the locations of said sensing means in proportion to the speed at which the pipe is being displaced and with an intensity which is larger the Coriolis force.

According to the other of its main aspects, the present invention also provides:

A flowmeter operating using the Coriolis force in accordance with the method of claim 1 or 2, comprising

- at least one pipe through which the fluid is passed, said pipe being fixed at its ends to a support member,
- an electromagnetic arranged to oscillate said pipe at a point midway along its length,
- two sensors located at positions between said electromagnet and the ends of said pipe and arranged to sense displacements of said pipe and to develop signals representing the respective displacements,
- a processing circuit operating on a difference signal representing the difference between the sensor signals and using it to determine the twisting moment caused by Coriolis forces acting on said pipe and the flowing fluid therein, in order to provide an output signal representative of the mass flow of said fluid through said pipe, and to control the signal applied to the electromagnetic force-generating means,

characterised in that:

- said processing means comprises
- a filter circuit to which said difference signal is applied to provide an average thereof over a certain time interval and thereby remove disturbances due to supply variations, seismic disturbances, or misalignment of the apparatus, said filter circuit also providing an average of a signal representing the sum of the sensing signals, and
- means for searching for, and maintaining, said twisting resonance frequency, by varying the oscillation frequency in steps and detecting the maximum value of the average difference signal occurring during said variation,

and in that said flowmeter also comprises

- electromagnetic braking means including coils fixed to said support member and arranged to apply a braking force to the pipe at the locations of said sensing means in proportion to the speed at which the pipe is being displaced and with an intensity which is larger than the Coriolis force, said braking action being more powerful at one of the locations than at the other, and said means for processing including means for compensating said output signal to allow for said differential braking action.

On the other hand, by means of the method of this invention, due to the considerable magnitude of the signal which can be obtained when the pipe is forced to oscillate in flexural mode at a frequency equal to the twisting frequency thereof, besides achieving a substantially improved performance, in particular at the small flow-rates, and a lower sensitivity to the seismic disturbances, without having to resort to the expensive doubling of the oscillating pipes as it results from the prior state of the art, and besides rendering functional, and really practicable, in particular in case of medium and large flow-rates, also the use of a rectilinear pipe, like the type disclosed by Sipin, making it operate at an oscillation frequency which coincides with the second harmonic, the considerable advantage is also achieved that the weight flow-rate flowing inside the pipe results to be linearly proportional to the amplitude of the twisting shifts of the same pipe. In fact, at the twisting resonance frequency, the flexural impulse force supplied to the tube produces a flexural shift of the same pipe, which shows a phase difference of 180° (in opposition) relatively to the above-said force; on the other side, the Coriolis force, always in quadrature relatively to the above said flexural shift, produces, in its turn, a twisting shift of the pipe, which, with the system vibrating at its twisting resonance frequency, results to be in quadrature relatively to the same force, and is hence in phase with the flexural shift; the resulting end shift of the pipe is still the vectorial sum of the above-said two shifts which, by being in phase, are simply added to each other, and hence the simple difference between this latter shift, and the flexural shift supplies a measure for the twisting shift, which is linearly proportional to the weight flow-rate to be determined.

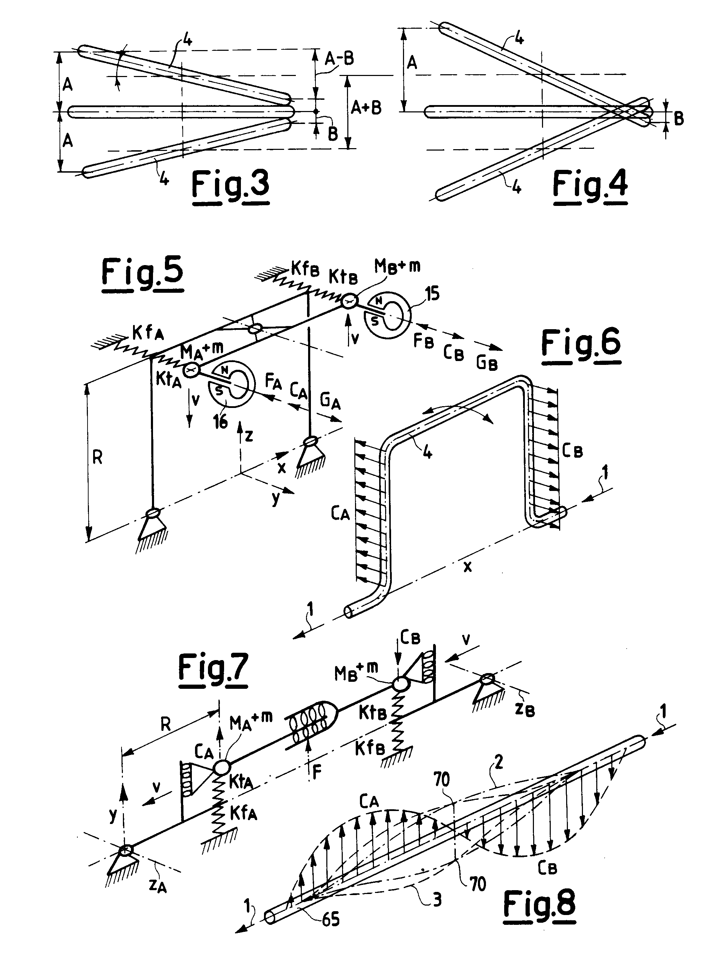

Furthermore, as the twisting shift of the pipe is in quadrature relatively to the Coriolis forces, it derives from this that said twisting shift will be maximum when the Coriolis forces are zero, and vice-versa, and it will hence be maximum at the limits of the flexural shift and zero at the centre thereof, as it is shown in Figure 3, with the result that at an end an A shift will occur, which is larger than the B shift at the other end, viz., Coriolis forces will occur, which are larger in A (fluid outlet) and smaller in B (fluid inlet), and, indeed, the above-said difference for determining the value of the weight flow-rate is actually reconducted to the

4

difference, A - B, in amplitude of the oscillations between the two vertices of a portal-shaped pipe, or between the two sides of a rectilinear pipe, in two intermediate points between the middle and the two ends of the same pipe.

Now then, the above result is substantially achieved in the apparatus of claim 3 not only by forcing, e.g., by an impulse-force-generating magnet, the pipe to oscillate at its twisting resonance frequency, but also by using two magnetic brakes with differentiated braking effect, proportional to the oscillation speed of the pipe, and of a magnitude at least equal to that of the Coriolis forces, as it will be better clarified in the following, which have the double purpose of generating, with their unbalancing, a signal of the same type, and with the same phase, as the Coriolis forces, which allows the pipe to oscillate in a twisting mode also when the weight flow-rate is zero, and hence the Coriolis forces are zero, i.e., summing-up, enables the circuit for the automatic search for the frequency peak to correctly operate also around zero value, and, above all, makes it possible to prevent the amplitude of the twisting shift, which is increasing due to the effect of the resonance, from exceeding the limit value compatible with a correct operation, i.e., that prevents a crossing of movements from occurring, with the reversal of the motion of B relatively to A, as it is shown in Figure 4, in that, a further typical need required by the instant invention for an actually linear proportionality to be obtained between the (A-B) amplitude of the twisting deformation of the oscillating pipe and the weight flow-rate is, as it will be better clarified in the following, that the amplitude (A + B) of the flexural oscillation of the pipe is always constant or controlled, and (see specifically Figure 3), that the shifts of A and B amplitude are always in phase reatively to each other, what occurs only under conditions of perfect twisting resonance, and only whenever neither mechanical misalignments, nor unsymmetries occur in the elastic characteristics of the pipe, and in the point of application of the impulse force.

The main problem consists in making the pipe vibrate in flexural mode, and at a frequency different from its spontaneous resonance frequency, with said frequencty being exactly maintained equal to the peak of twisting resonance frequency.

The solution was obtained by means of an electronic circuit which, according to a characteristic of the present invention, searches for, and maintains, the twisting frequency obtained by maximizing the amplitude of the measurement signal (A-B), viz., determines, by increasing, by successive steps, the frequency of the impulse force supplied to the pipe, the frequency of flexural oscillation to which the maximum twisting ocillation, and hence, the highest (A-B) value, corresponds.

Then, according to a variant of the present invention, the circuit makes it possible to find out, and maintain, the twisting resonance frequency, also in the presence of variable flow-rates.

Furthermore, according to another characteristic of the present invention, other electronic circuits are provided, in order to filter, in an original way, the signals corresponding to (A + B) and (A-B) quantities, in order to purge them from the disturbances, removing the spurious harmonics and only retain the components which are in perfect quadrature with the Coriolis forces, and therefore surely in phase with one another, in order to keep constant the (A + B) amplitude of the flexural oscillation, and in order to compensate for the above-said differential action of the brakes, such that when the flow-rate is zero, a zero outlet signal is achieved.

Finally, according to a further advantage of the present invention, the measurement system is made immune from the seismic disturbances, with a considerable saving in costs, and without the usual complication of the doubling of the pipes, by simply mounting it on an elastic support, which thus enables it to oscillate in opposition of phase relatively to the oscillation of the pipe, and hence not to interact with the support plane.

On the other side, the above-said necessary conditions for a correct operation of the measurement instrument derive from a precise mathematical analysis of the behaviour of a pipe oscillating at the twisting resonance frequency.

In order to simplify the treating, the oscillating system has been reduced to two articulations only (see Figures 5 and 7), which, in case of a "U"-shaped, or portal-shaped pipe (see figure 6), identify the flexural mode and the twisting mode of movement, whilst in case of a rectilinear pipe (see Figure 8), identify the oscillation relevant to the first harmonic, and to the second harmonic. The masses $M_A$ and $M_B$ have been concentrated, in their turn, in two points (see still Figures 5 and 7), and only the motion of these two points is analysed. These masses $M_A$ and $M_B$ concentrate the weight of the pipe, and of all of the rigid components connected with it for the supply of the impulse force causing the pipe motion, for the braking and for the monitoring of the movement, whist the mass m represents the efficacious value, referred to the considered point, of the mass of fluid flowing through the pipe according to the direction shown by the arrows 1 (see Figures 6 and 8), and concerned by the Coriolis forces $C_A$ and $C_B$.

Still to the two points taken into consideration, the elastic constants are referred, which relate to the flexural motion, $K_{fA}$ and $K_{fB}$; and the elastic constants are referred, which relate to the twisting motion, $K_{tA}$

and $K_{tB}$; furthermore, to the same two points, two forces, $F_A$ and $F_B$, are considered as separately applied, which cause the system to forcedly oscillate, and which, in reality, can also be replaced by one single force F applied to the centre of symmetry of the pipe. Finally, also the viscous action and the aerodynamic action are referred to the two above-said point, with two forces proportional to the speed multiplied by the brake dampening coefficients, respectively $G_A$ and $G_B$, and with two further forces, proportional to the square speed, multiplied by the coefficient $C_{dA} = C_{dB} = C_{dC}$, which defines the aerodynamic resistance. Furthermore, in as much as the considered movements are of very small magnitude, the possibilities of losses due to the cycle of hysteresis of the material of the pipe, or due to the dynamic effects of the vortexes induced in the fluid contained in the pipe have been neglected.

Whilst in the portal-shaped pipe (see Figure 5), the flexural movement is simplified, up to be considered as a revolution around the X axis, in the rectilinear pipe, wherein the schematization has been forced by means of hinges, sliders and slides (see Figure 7), such to have the same elements, the same constants, and, hence, the same relationships which describe the motion, the flexural movement takes place by the masses M + m as a revolution around the two $Z_A$ and $Z_B$ axes passing through the end hinges. Then the motion of the two masses taken into consideration takes place both in the portal-shaped pipe case, and in case of the rectilinear pipe, always according to the Y axis.

We specify furthermore that by "A" indicated is the maximum shift, relatively to the axis of rest, of $M_A$ + m mass, by "B" indicated is the maximum shift, relatively to the axis of rest, of $M_B$ + m mass (on this regard, see Figure 3), and that, for the sake of simpleness, the supply of the impulse force to the system is supposed to take place by means of the application of two forces $F_A$ and $F_B$ having a sinusoidal law, or by means of a single force F, always of

$$F = F_o . \sin wt$$

type, applied in the centre of symmetry, even if from a practical standpoint, an acceptable performance could also be obtained by means of wave shapes different from sinusoidal wave, anyway with the drawback that the motion would be dirtied by the superimposition of all of the harmonics contained in the impulse-supplying force.

Now, the motion equations which describe the equilibrium between the excitation forces $F_A$ and $F_B$ and respectively the forces of inertia of the system, the forces due to the viscous friction of the magnetic brakes, the Coriolis forces, the forces due to the aerodynamic friction and the elastic reactions result, respectively:

$$F_A = -\ddot{Y}_A(M+m) - \dot{Y}_A(G-\Delta) + 2mV\frac{\dot{Y}_A}{R} - \dot{Y}_A^2 C_d - Y_A K \qquad (1)$$

$$F_B = -\ddot{Y}_B(M+m) - \dot{Y}_B(G+\Delta) - 2mV\frac{\dot{Y}_B}{R} - \dot{Y}_B^2 C_d - Y_B K \qquad (2)$$

wherein:

G     represents the average value of the coefficient of dampening of the magnetic brakes, viz., the value:

$$(G_A + G_B)/2$$

and $\Delta$ represents their half-difference, i.e., the value:

$$(G_B - G_A)/2$$

so that the term $(G-\Delta)$ is actually equal to $G_A$, and $(G+\Delta)$ is equal to $G_B$, i.e., the above in order to show that the two dampening coefficients $G_A$ and $G_B$ are actually structurally realized in different ways, with the larger coefficient $(G_B)$ being on the side of fluid input, and the smaller coefficient $(G_A)$ being on the fluid output side: in such way, the brakes generate forces different from each other, and in phase with the Coriolis forces, and the torque deriving from their difference has, from a physical standpoint, the same effect as of a flow rate;

R     represents the radius of revolution of the mass $\underline{m}$ (see Figures 5 and 7);

V     represents the speed of flow through the pipe of the fluid particle $\underline{m}$;

K     indicates the total elastic constant, and the term

$$2\ mV\ \frac{\dot{Y}}{R}$$

indicates the Coriolis forces $C_A$ and $C_B$, wherein $\dot{Y}/R$ represents the angular speed of the point under consideration, and mV is a term proportional to the weight flow rate flowing inside the pipe.

In order to evidencing the forces which generate the twisting motion, it is advantageous to decompose each motion into its respectively flexural and twisting components, viz.:

$$Y_A = \frac{Y_A + Y_B}{2} + \frac{Y_A - Y_B}{2}$$

$$Y_B = \frac{Y_A + Y_B}{2} - \frac{Y_A - Y_B}{2}$$

By decomposing also the elastic reactions into the two contributes, we obtain:

$$Y_A K = \left(\frac{Y_A + Y_B}{2} K_{fA} + \frac{Y_A - Y_B}{2} K_{tA}\right) \qquad (3)$$

$$Y_B K = \left(\frac{Y_A + Y_B}{2} K_{fA} - \frac{Y_A - Y_B}{2} K_{tA}\right) \qquad (4)$$

By subtracting equation (2) from equation (1), after introducing equation (3) and equation (4), and imposing that

$K_{fA} = K_{fB}$

and that

$K_{tA} = K_{tB} = K_t$,

we obtain a relationship between the forces which condition the twisting motion, while the terms which describe equal, in-phase forces disappear, and which hence relate to the flexural motion:

$$0 = - (M+m)(\ddot{Y}_A - \ddot{Y}_B) - G(\dot{Y}_A - \dot{Y}_B) + \Delta(\dot{Y}_A + \dot{Y}_B) + \frac{2\,mV}{R}(\dot{Y}_A + \dot{Y}_B) -$$
$$- C_d(\dot{Y}_A^{\,2} - \dot{Y}_B^{\,2}) - K_t(Y_A - Y_B) \qquad (5)$$

Under these conditions, it is possible to admit that the resulting motion law is sinusoidal of type:

$Y_A$ = A sin wt
$Y_B$ = B sin (wt + $\vartheta$),

wherein $\vartheta$ is the phase delay between the two movements.

This phase delay $\vartheta$ is at the basis of all of the instruments for carrying out measurements of weight flow rate, which have been practically embodied up to date, which all operate with a flexural vibration centered in frequence on the first flexural resonant. Under those conditions, in fact, if the system is mechanically symmetrical, the angle $\vartheta$, even if is extremely small, is perfectly linear with the weight flow rate of the outflowing fluid, whilst the amplitudes A and B of the two movements are equal. However, in the present case the angle $\vartheta$ is supposed to remain zero with varying flow rate values, and hence we'll have:

$Y_A$ = A sin wt
$Y_B$ = B sin wt     (6)

As a consequence, the speeds and accelerations of the two points will be, respectively:

$$\dot{Y}_A = A \, w \, \cos \, wt \qquad \ddot{Y}_A = - A \, w^2 \, \sin \, wt \qquad\qquad (7)$$
$$\dot{Y}_B = B \, w \, \cos \, wt \qquad \ddot{Y}_B = - B \, w^2 \, \sin \, wt$$

Then substituting equations (6) and (7) into equation (5), we have:

$$0 = (M+m)(A-B) \, w^2 \sin \, wt - G(A-B) \, w \, \cos \, wt -$$
$$- \Delta(A+B) \, w \, \cos \, wt + \frac{2mV}{R}(A+B) \, w \, \cos \, wt -$$
$$- C_d(A+B)(A-B) \, w^2 \cos^2 wt - K_t(A-B) \, \sin \, wt$$

from which:

$$A-B = \frac{(A+B)(2mV/R + \Delta)}{G + \left[ K_t - w^2(M+m) \right](\tan \, wt)/w + (A+B)C_d w^2 \cos^2 wt} \qquad (8)$$

If we furthermore suppose that the braking effect G of the magnetic brakes is considerably predominant as compared to the aerodynamic friction, which can be furthermore considered as negligible, also due to the fact that the the flexural movement has a very small amplitude (A + B), the equation (8) is reduced to:

$$A-B = \frac{(A+B)(HQ + \Delta)}{G + \left[ K_t - w^2(M+m) \right](\tan \, wt)/w} \qquad (9)$$

wherein the weight flow rate Q has been introduced, which is linearly proportional, according to the constant H, to the Coriolis term 2mV/R.

We observe now that if the oscillating system is made specifically oscillate at its twisting resonance frequency, equal to

$$w = \sqrt{\frac{K_t}{M+m}}$$

also the second term appearing in the denominator of equation (9) becomes zero, so that said latter equation is reduced to:

$$A-B = \frac{(A+B)(HQ + \Delta)}{G} \qquad (10)$$

From equation (10), we observe that a linear proportionality exists between the weight flow rate Q outflowing through the oscillating system, and the amplitude of the twisting oscillation (A-B) on condition that the amplitude of the flexural oscillation (A + B) is maintained constant and controlled, with its effect being measured and entered in the computation.

On the other hand, from the above-said equation, we observe that the smaller G, the larger the twisting shift (A-B), and hence the larger the effect of the Coriolis forces, but one should remind that G cannot be too small, because (A-B) would then become too large, and the crossing of the movements would occur, with the consequent reversal of the motion of B relatively to A, as already mentioned and illustrated in Figure 4, with a consequent loss of linearity between the weight flow rate and the twisting shift. In as much as this reversal begins when the twisting shift B becomes zero, i.e., when we have

$$\frac{A-B}{A+B} = 1,$$

the condition which must be fulfilled is that:

$$\frac{A-B}{A+B} < 1$$

and, consequently, from (10) we have that:

$$\frac{A-B}{A+B} = \frac{HQ + \Delta}{G} < 1$$

from which:

$$G > HQ + \Delta$$

i.e., the system is linear only if the action of the magnetic brakes generates forces larger than the forces generated by the Coriolis effect.

Summing up, a linear proportionality is obtained between the amplitude of the twisting oscillation (A-B) and the weight flow rate Q, so that this latter can be determined by simply measuring the shifts of the pipe

EP 0 272 758 B1

in the two points taken into consideration, on condition that the preset hypotheses are fulfilled, i.e., that unsymmetries do not exist in mechanical characteristics (unequal masses), or in the elastic characteristics ($K_f$ and $K_t$) of the system, or in the application of the pulsating force(s), which, by generating disturbances in quadrature relatively to the Coriolis forces, would tend to displace in phase the two shift signals A and B, taking away linearity from the measurement system, and that, furthermore, the impulse-supplying forces are sinusoidal, without harmonics in phase with one another ($\vartheta = 0$), that implies, summing up, that the two shift signals A and B result in phase with each other, and lacking in spurious harmonics; that the frequency of oscillation is exactly, and exclusively equal to the frequency corresponding to the twisting resonance of the system, that the amplitude of the flexural oscillation (A + B) remains constant or controlled, and, finally, that the oscillation motion is counteracted by two brakes applying different braking effects, ans whose total action is considerable, and always larger than the action caused by the Coriolis effect.

On the other hand, one should remind that, instead of the shifts of the pipe measured, for example, by means of two Hall probes, in the two points taken into consideration, also the speeds of the two points, measured by means of two speed sensors, can be considered, in as much as the differential variable of the two signals becomes simply proportional to w(A-B), while an automatic control means which keeps constant the sum of the two signals practically accomplishes the constance of w(A + B) product, and hence the validity of equation (10) is kept unchanged, but with said equation being expressed in the shape:

$$w\ (A-B) = \frac{w\ (A+B)\ (HQ\ +\ \Delta)}{G}$$

The use of the speed sensors involves however an advantage, based on the fact that the automatic control means, which keeps constant the w(A + B) product, even if is substantially equivalent to the control of the only amplitude (A + B), has the advantageous characteristic of rendering invariable the values of the Coriolis forces with varying w, due to, e.g., a change in temperature, which causes a change in the elastic constant $K_t$ of the metal of the pipe

$$(w\ =\ \sqrt{\frac{K_t}{M\ +\ m}})$$

and this simplifies the problem of keeping low the thermal disturbances which, with the term HQ remaining constant, substantially depend on the possible not constancy of $\Delta$ and of G with varying temperature.

The invention is now better explained by referring to the hereto attached drawings, which display preferred forms of practical embodiment, given for only exemplifying, and not limitative, purposes, in that technical, technological and structural variants can be always supplied within the scope of the present invention.

In said drawings:

Figure 1 shows a partially sectional perspective view of a flowmeter, or flow rate meter, with a portal-shaped pipe, operating according to the teachings of the present invention;

Figure 2 shows a partially sectional perspective view of a flowmeter, with a rectilinear pipe, also operating according to the teachings of the present invention;

Figure 3 is a diagram showing, as already said, the flexural-twisting shifts of the pipe used according to the present invention;

Figure 4 is a diagram showing, as already said, the crossing of the movements of the ends of the pipe, due to an excessive twisting movement;

Figure 5 shows the mechanical schematization made for the mathematical study of the behaviour of a portal-shaped pipe oscillating at the frequency of twisting resonance;

Figure 6 shows the instantaneous behaviour of the Coriolis forces $C_A$ and $C_B$ acting on the two sides of the oscillating portal-shaped pipe;

Figure 7 shows a diagram analogous to that of Figure 5, but made for a rectilinear pipe;

Figure 8 shows the instantaneous behaviour of the Coriolis forces $C_A$ and $C_B$, as well as the oscillations relevant to the first harmonic 2, and to the second harmonic 3 of a rectilinear pipe;

Figure 9 shows, in a single block diagram, the electronic control circuits for a flowmeter according to the invention;

Figure 10 shows a variant of the block diagram of Figure 9, to make due allowance for the variability of the flow rate;

Figure 11 shows the behaviour with time of the function cos(i.$\pi$/3), discretized according to the invention by the function cos(2$\pi$t/T);

Figure 12 is a chart showing the curve of correlation between the integrated quantity U and the frequency of oscillation f with a constant flow rate, as well as the frequency increases which must be supplied in the search for the twisting resonance frequency;

Figure 13 is a chart showing the behaviours with time, correlated with one another, of the quantities necessary for the search for the twisting resonance frequency with the flow rate being constant;

Figure 14 is a chart showing the curves of correlation between the integrated quantity U and the frequency of oscillation f at different values of flow rate, as well as the frequency increases which must be supplied in the search for the twisting resonance frequency;

Figure 15 is a chart showing the behaviours with time, correlated with one another, of the quantities necessary for the search for the twisting resonance frequency with a variable flow rate;

Figure 16 shows a double-rectilinear-pipe flowmeter, it too operating according to the teachings of the present invention;

Figure 17 shows a perspective view, on an enlarged scale, of a detail of the flowstat of Figure 16.

Referring to the Figures, wherein corresponding elements have been indicated by same reference numerals, by 4 indicated is a portal-shaped pipe, fastened to, and rigidly hold with its two ends inside two shoulders 5 and 6 of a rigid support 7, through which the fluid 7, whose weight flow rate is to be measured, flows in the direction of the arrows 1.

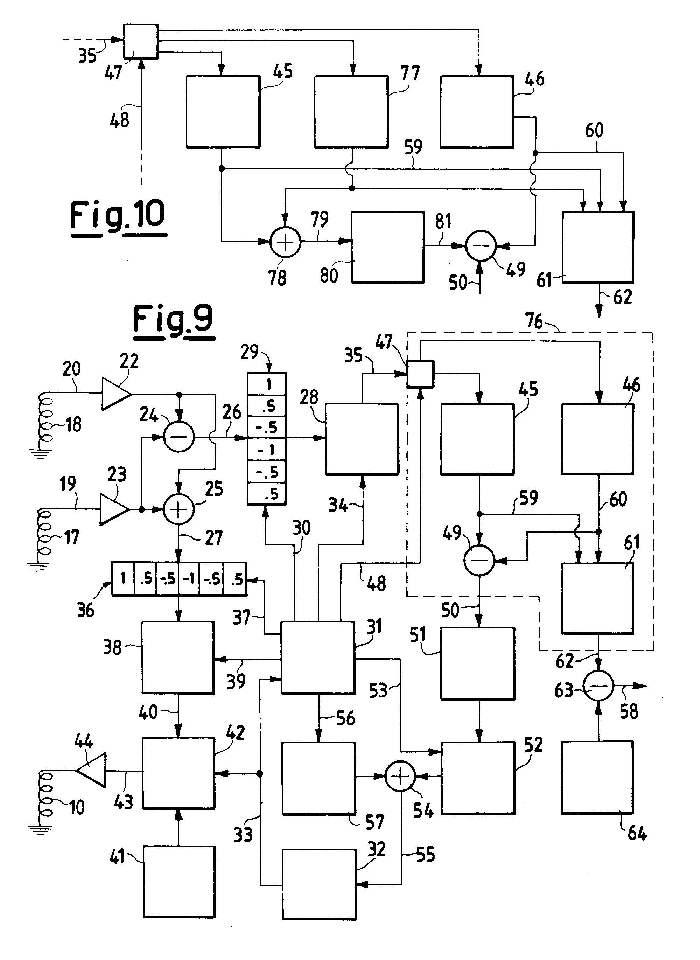

Said pipe 4 is made oscillate around the axis X by an electromagnet 9, whose excitation coil 10 is fed with a determined voltage having a determined frequency, in particular the twisting resonance frequency of the system, supplied by the circuit system represented by the block diagram shown in Figure 9, and contained inside the box 11 fastened to the rear side of the support 7, which also supports the electromagnet 9. To the corners of the portal 4, two small brackets 12 and 13 are then fastened, to which the movable coils 14 of two electromagnetic brakes, respectively 15 and 16, are fastened, with the two electromagnetic brakes being in their turn fastened to the support 7.

Then, to each movable coil 14, applied is a speed sensor, or a Hall probe, respectively 17 and 18, which thus substantially measure the shifts of the corners of the portal, and, more precisely, respectively, the already mentioned quantities B and A, whose values are respectively sent to the inputs of the system of Figure 9, respectively through the leads 19 and 20. The two electromagnetic brakes 15 and 16 have furthermore braking effects which are different from each other, the larger of said two braking effects being the effect generated by the brake 15 provided at the inlet side of the pipe, to create a false Coriolis effect, which twists the pipe also in the absence of a flow rate. Finally, the whole equipment, or flowmeter, is mounted of supports 21 of elastic type, which render it immune from seismic disturbances.

The above said signals A amd B produced by the pipe - it is indifferent whether the pipe is of the portal type, or is a rectilinear pipe, as well as it is also indifferent whether they are position signals, rather than speed signals - and detected by the sensors 18 and 17, after being respectively amplified by the amplifiers 22 and 23 (see Figure 9), are then subtracted from each other in the node 24, and added to each other in the node 25, to have, at output 26, a signal corresponding to the quantity (A-B) and at the output 27 a signal corresponding to the quantity (A + B).

On the other hand, due to the almost total impossibility, from a practical viewpoint, of maintaining a perfect mechanical alignment in the flowmeter, in as much as this latter irremediably decays also just due to the simple and easy unsymmetrical fouling of the pipe, as well as due to the disordered vibrations which occur due to various and fortuitous causes, the above-said two signals f(A-B) and f(A + B) are not perfectly sinusoidal, and must be therefore filtered in order to remove the spurious harmonics, and only retain the components in perfect quadrature relatively to the Coriolis forces.

This result is achieved according to the invention by means of a novel and simple filter based on the Fourier transforms.

In fact, as known, when a sinusoidal signal whose phase and frequency are known, is perturbated by overlapping noises having frequencies multiple of the sought signal, this latter can be isolated and extracted by simply computing the Fourier coefficient relevant to the sought frequency, viz.:

$$A - B = \int_{0}^{nT} f(A-B).\cos(2\pi t/T).dt \qquad (11)$$

wherein $T$ is the period referred to the frequency of forced oscillation of the pipe, and $\underline{n}$ represents the number of oscillations during which the integration of the initial signal $f(A-B)$ is carried out.

Unfortunately, the practical embodiment of (11), although makes it possible an actual insensitivity to the phase displacements and to the presence of higher harmonic oscillations to be achieved, results too complex, and hence expensive both whether means of analog type, or means of digital type, are adopted.

This impasse was overcome according to the present invention by replacing equation (11) with an approximate relationship. More specifically, in (11) equation, the function $\cos(2\pi.t/T)$ is discretized and computed for time intervals $\Delta t = T/6$, so that it becomes $\cos(i.\pi/3)$, wherein the index number $i$ has values comprised within the range of from 0 to $(6n-1)$, in order to cover the whole range of integration time $nT$. On the other hand, as the above-said values which are assumed by the cosinus function are constant, they can be taken out of the sign of integral, so that equation (11) becomes:

$$(A-B) = \sum_{i=0}^{6n-1} \cos(i.\pi/3).1/4T \int_{i.T/6}^{(i+1).T/6} f(A-B).dt \qquad (12)$$

wherein the concept of summation of a set of integrations, each over a range of $T/6$ (in fact, when the index $i$ becomes $(6n-1)$, the upper integration limit $(i+1).T/6$ equation (12) becomes equal to $nT$ of equation (11).

It is clear that such a discretization obviously renders less accurate the integral, but, by increasing the number $\underline{n}$ of the integration periods, it is possible to decrease this inaccuracy, up to obtain quite acceptable results.

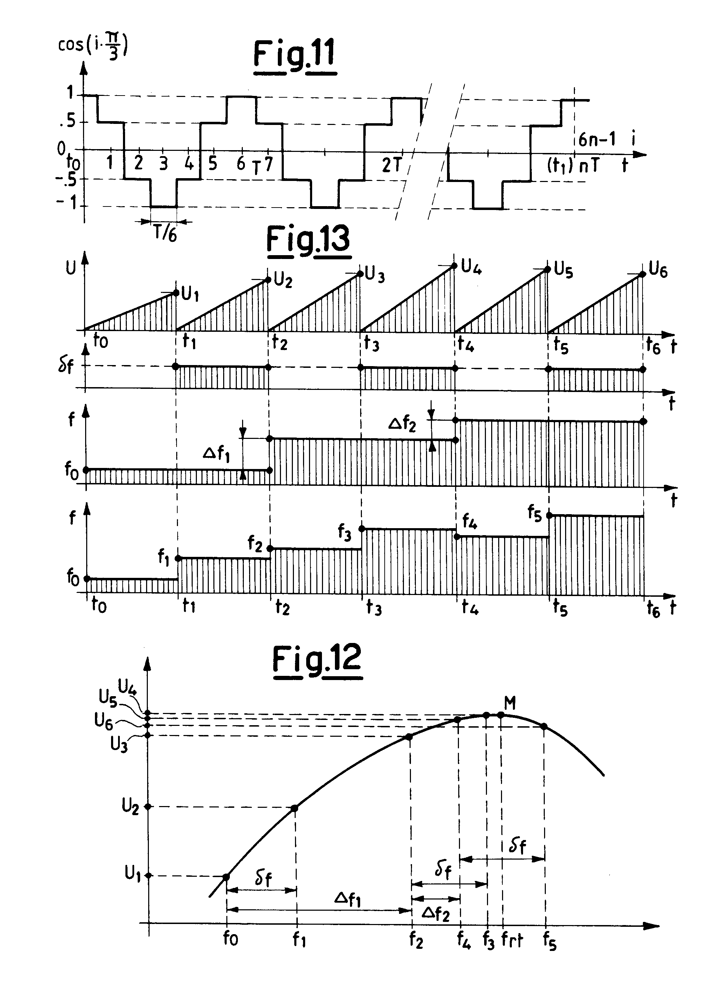

Summarizing, equation (12) is an approximate relationship, wherein to one single integration of the product of two variable functions, the summation was replaced of a set of integrations of one single function, which is multiplied by the constant values which the cosinus function assumes every $\pi/3$rd of period. The cyclic sequence of said values with increasing $\underline{i}$ values is 1; 0.5; -0.5; -1; -0.5; 0.5, according to the broken line of Figure 11.

In practice, the filter is substantially constituted by an analog integrator 28 (see Figure 9), to the input of which the signal $f(A-B)$ is sent, which is available in 26, after that it is cyclically multiplied, in the block 29, by the values of the above cited sequence, under the preliminary command, through the connection 30, by a sequencer 31, which receives the basic synchronization for all of the operations carried out by the system, from a voltage-frequency converter 32 through the connection 33, and defines, through the connection 34, the number $\underline{n}$ of the oscillations, at the end of which the integration in 28 is terminated.

At the end each integration step, during the time interval, e.g., of from $t_0$ to $t_1$, at the output 35 of the integrator 29 an integrated signal is therefore obtained, which will be called "U", and which represents the average value of the quantity $(A-B)$ during the time period taken into consideration (see the first chart of Figure 13), but not yet the value of the weight flow rate to be determined, which is obtained, on the contrary, at the specific frequency of twisting resonance of the system, the search for which causes changes in U.

A similar filtering is envisaged for the signal $f(A+B)$ too, which is available at output 27, which is therefore multiplied, in the block 36, by the values of the sequence therein preset, and cyclically made available on command by the said sequencer 31, through the connection 37, and is then integrated in an integrator 38 over the time relating to the $\underline{n}$ oscillations preset by the same sequencer 31, through the connection 39.

The signal, filtered and proportional to the amplitude $(A+B)$ of the flexural oscillation of the pipe, which is available at the outlet 40 of the integrator 38, is then compared to a set signal, preset through the generator 41, in a PID regulator, 42, which thus supplies, at its output 43, a pulsating command signal, whose frequency is imposed by the said voltage-frequency converter 32 and whose amplitude modulates, through the amplifier 44, the impulse energy to be supplied to the excitation coil 10 of the impulse-force-generating electromagnet 9, such to keep constant the above said amplitude $(A+B)$ of the flexural motion of the vibrating system.

The search for the frequency of twisting resonance of the system is then made substantially coincide, according to the present invention, with the search for the frequency which maximizes the amplitude (A-B) of the twisting oscillation of the pipe, and therefore, summarizing, with the search for the frequency which maximizes the above said U signal available at the output 35 of the integrator 28.

In Figure 12, the curve is shown, which represents the behaviour, with the flow rate being constant, of the signal U with varying oscillation frequency f, which shows a maximum peak in correspondence of the frequency of twisting resonance $f_{rt}$.

It being stated in advance that the resonance peak is actually not like the peak shown in Figure 12, but much sharper than that, so that a small deviation from the frequency of twisting resonance would cause large variations in U, and, therefore, large errors in the measurement of the flow rate, so that it is necessary that the frequency is always stabilized on the value of twisting resonance, the search of the maximum peak is accomplished by periodically supplying small constant variations, $\delta f$, to the impulse-force-generating frequency, measuring the variations $\Delta U$ deriving from such variations, such to detect the tangent $\Delta U/\delta f$ to the signal amplitude-frequency curve, and changing, on the basis of the sign and of the value of such tangent, the frequency of oscillation, by increasing, or decreasing, this latter, by a value $\Delta f$, which is proportional to the value of said tangent $\Delta U/\delta f$. More specifically, the impulse-force-generating frequency is increased every second period, by a constant value $\delta f$, whose behaviour with time is shown by the broken line shown in the second chart from up downwards of Figure 13, and the results U of two successive integrations carried out by the integrator 28 are loaded to two distinct storage devices 45 and 46, which are alternatively enabled to perform the storage by a switch 47 governed by said sequencer 31 through the connection 48.

Now then, at the end of the time $t_1$ (see specifically Figures 12 and 13), the integrator 28 supplies the output 35 signal $U_1$, which corresponds to the value of (A-B) which is obtained when the oscillation frequency if $f_0$, a signal, which, through the switch 47, is loaded to the storage 45 on command by the sequencer 31. During the subsequent time period, until $t_2$, the oscillation frequency is increased by $\delta f$, and goes to value $f_1$, and the corresponding integrated value $U_2$ is loaded to the other storage device 46, still on command by the sequencer 31. The contents of the two storage devices 45 and 46 are then subtracted from each other in the node 49, to obtain, at output 50, a signal $\Delta U$, which represents the change in amplitude (A-B) generated by the change $\delta f$ in the oscillation frequency. Said signal $\Delta U$ is then multiplied in the adapter 51 by a constant $K/\delta f$, in order to obtain the value, with the proper sign, of the tangent $\Delta U/\delta f$ , which represents the amount of the change

$$\Delta f_1 \ = \ K.\Delta U/\delta f$$

to be supplied to the frequency of oscillation $f_0$ during the next periods $t_3$ and $t_4$ (see the third chart, from up downwards, of Figure 13).

Making the oscillation frequency vary by a so-computed value $\Delta f$, makes it possible to optimize, and speed up the reaching of the maximum peak of the signal U, in that the variations $\Delta f$ result to be large when the impulse-force-generating frequency is far away from the twisting resonance, and the smaller, the smaller the difference between said impulse-force-generating frequency and the frequency of twisting resonance (because, the smaller the difference between said impulse-force-generating frequency and the curve peak frequency, the smaller the value of the tangent: see figure 12).

Said analog value $\Delta f_1$ generated in the adapter 51 is then sent to increase the contents, also of analog character (which, at the considered point in time, corresponds to $f_0$), stored in storage device 52, but always at the end of each second period, i.e., at time points $t_2$, $t_4$, $t_6$, etc., on command by the sequencer 31 through the connection 53 (the behaviour with time of the level of the contents of said storage device 52 is displayed by the third chart, from up downwards, of Figure 13). The output signal from the storage device 52 is then sent, through the addition node 54 and the connection 55, to the said voltage-frequency converter 32, which converts it into a frequency $f_2$, to be sent, via the connection 33, to the PID unit 42, to modulate in frequency the signal governing the circuit 10 of excitation of the impulse-force-generating magnet 9, as well as to the sequencer 31, to supply the basic synchronization of all of the operations.

Then, by oscillating at frequency $f_2$, the system will supply, at outlet 35, the new signal $U_3$ (see Figure 13), which will be stored in said storage device 45.

On the other hand, to said addition node 54 also sent is, on command by the sequencer 31, through the connection 56, the above mentioned small analog signal $\delta f$ generated by the disturbances generator 57, and whose behaviour is displayed by the broken line shown in the second chart, from up downwards, of Figure 13. In such way, at time point $t_3$ (see still Figure 13), the two signals as displayed by the second chart and by the third chart of Figure 13 are added to each other, thus generating a new frequency $f_3$, as shown by

the fourth chart of Figure 13, which substantially shows the behaviour with time of the frequency available at the output of the converter 32, with which the force causing oscillating system to oscillate is generated, in correspondence of which a new signal $U_4$ will be generated, which will be stored in storage device 46. At this time, the previously described cycle is repeated, with a new value $\Delta f_2$ being determined, and, consequently, a new oscillation frequency $f_4$ and a new signal $U_5$ being defined, and so on.

The result of the above said operations, with a few repetitions, is that the frequency corresponding to the peak M of the curve of Figure 12 is reached and maintained, wherein the tangent $\Delta U/\delta f = 0$, the output magnitude is maximum, and the oscillating frequency is the twisting resonance frequency $f_{rt}$.

But, in practice, the increments $\delta f$ cannot be so small as to secure that the peak M is approximated without going beyond it. The actual sharp curvature of the top of the peak causes, actually, as shown in Figure 12, wherein the increase $\delta f$ in the frequency $f_4$ leads to a frequency $f_5$ beyond the frequency of twisting resonance $f_{rt}$, the operating frequency to fall, due to the effect of the variations $\overline{\delta f}$, now before, and now beyond the twisting resonance frequency $f_{rt}$, with the result that $\Delta U$ practically never results equal to zero, and hence the output signal U oscillates aroung the maximum value.

In order to minimize the error in output, due to the above said drawback, to the actual output 58 of the instrument, the greater value is supplied, of the two available output signals, which are obtained with, and without the disturbance signal $\delta f$ at each cycle of two integrations for peak search for. In other terms, the contents of the two storage devices 45 and 46 are sent, through respectively the connections 59 and 60, to a selector of maximum value 61, which thus delivers to the output 58 always the greater of the two values available from said storage devices. In this way, even if, during the seach for the peak, some U values result to be lower than the peak value, these values have no influence on the output, but are only used to the end of the search for the frequency of twisting resonance.

On the other hand, in order to have in 58 a zero output signal with a zero flow rate, from the selected output signal 62, in the node 63 a signal is subtracted, which physically corresponds to the said differential action performed by the magnetic brakes 15 and 16, such signal being supplied by a signal generator 64, which is also used for calibrating the instrument.

The above disclosed circuit for searching for, and maintaining, the frequency of twisting resonance is substantially simple and perfectly efficient until the flow rate of the fluid under measurement does not change too quickly.

In case of quick changes in flow rate, conditions may occur, under which the circuit does not correctly operate, with the result that, for some time, i.e., before the flow rate reaches a steady state, the impulse-force-generating frequency may not correspond to the frequency of twisting resonance.

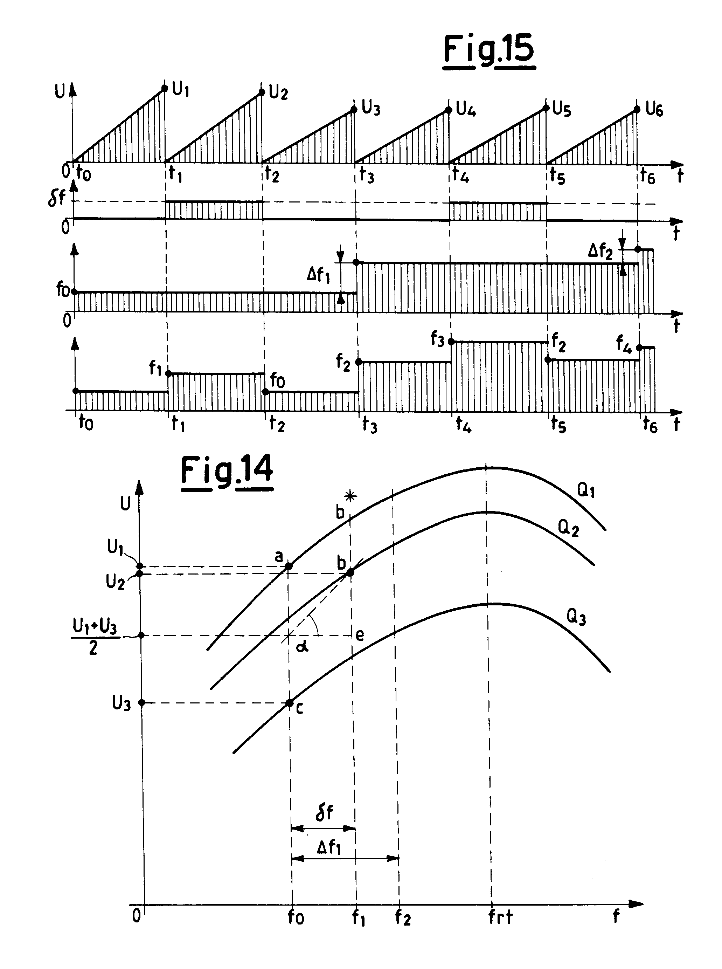

The mechanism by which an error can occur in the processing of the frequency corrections when the flow rate changes quickly can be easily understood in such a case as shown by Figure 14, wherein several curves are reported, which are characteristic curves for U signals as a function of frequency, and referred to different flow rates $Q_1$, $Q_2$ and $Q_3$, which are hypothesised to rapidly follow each other during time.

In fact, it is evident that, in particular at frequency $f_0$ with flow rate $Q_1$, the output signal is $U_1$ (the "a" point of $Q_1$ curve of Figure 14), when the frequency is increased by $\delta f$, i.e., when the frequency is increased to the new value $f_1$, the magnitude of the new output signal, instead of increasing like it would do, if the flow rate had remained constant (the "b*" point of curve $Q_1$), decreases, reaching the $U_2$ value, because the flow rate decreased to $Q_2$ (the "b" point of $Q_2$ curve). The circuit for the search for the resonance frequency computes, under these conditions, a correction to be supplied to the frequency, having the value of $\Delta U \equiv \Delta U_2 - U_1$, which, by being negative, clearly causes the frequency to depart from the sought twisting resonance frequency $f_{rt}$.

In order to obviate such drawback, still according to a characteristic of the instant invention, a variant of the above disclosed circuit was developed, which makes it possible the twisting resonance frequency to be pursued even when the flow rate changes rapidly.

According to this variant, no longer two-period cycles are taken into consideration, but three-period cycles are considered, so that the analog signal $\delta f$ which is used is no longer that as shown by the second chart from up downwards of Figure 13, but the signal represented in the second chart from up downwards of Figure 15, i.e., the increase $\delta f$ is added to the operating frequency every third period. The analysis is hence carried out on three successive values of U signal, and, precisely, e.g., on the signal $U_1$ corresponding to the $f_0$ frequency and at the flow rate $Q_1$ (see Figure 14), on the subsequent value $U_2$ obtained at the frequency $f_2 = f_1 + \Delta f$, and at the flow rate $Q_2$, and at a third value $U_3$, obtained by bringing the system impulse-force-generating frequency back to the initial value it had at cycle beginning, i.e., to $f_0$ (see the fourth chart, from up downwards, of Figure 15), with the flow rate being become $Q_3$ (the "d" point of Figure 15).

Now, one should remind that the above said two values $U_1$ and $U_3$, obtained at the same frequency, are very different from each other, whilst they would be the same if the flow rate had been under steady state conditions. Now then, the method developed according to the present invention consists in applying to the basic frequency $f_0$ a correction $\Delta f_1$, which is not proportional to the difference between the second measured value $U_2$, and the first value $U_1$, but is proportional to the difference between said second measured value $U_2$ and the average value of the values $U_1$ and $U_3$, as computed at the same frequency $f_0$, and at the flow rates $Q_1$ and $Q_3$. In other terms, an approximate value is substantially computed, of the actual tangent to the curve corresponding to the flow rate $Q_2$ in the considered area, which is represented by the tangent of be angle (see Figure 14), viz.:

$$\tan \alpha \simeq \frac{\overline{be}}{\delta f} = \frac{U_2 - (U_1 + U_3)/2}{\delta f}$$

It should be also observed that the above said approximation the better, the more regular the change in flow rate, up to even coincide with the correct value in case of equidistance of the relevant curves at flow rates $Q_1$, $Q_2$ and $Q_3$.

In the actual case of a not regular variation, as shown, e.g., in Figure 14, the above said approximate value shows the advantage that it at least shows the advantageous characteristic that the tangent has the correct value, and hence generates such a correction $\Delta f_1$ to be supplied to the oscillation frequency, that an approaching to the resonance peak, and therefore to the twisting resonance frequency $f_{rt}$, is anyway obtained.

From the view point of the electronic circuit, the above disclosed variant consists in simply replacing the circuit portion 76 of Figure 9 with the circuit portion shown in Figure 10, wherein a third storage device 77 is provided, which is designed to store, through the above said, now three-way, switch 47, the signal $U_3$ available at the output of the integrator 28 during the third period of the cycle.

The two storage devices 45 and 77 are then connected to the addition node 78, to obtain at output 79 the value $(U_1 + U_3)$, which is divided, in the divider 80, by 2, to obtain, at output 81, the average value $(U_1 + U_3)/2$ which shall be used, as said, for computing the approximate tangent by means of the difference node 49 and of the adapter 51, which have already been disclosed for the basic circuit.

Then, analogously to as provided for the basic circuit, in this case too, a selector of maximum value 81 is provided for, to which the contents of all of the three storage devices 45, 46 and 77 are sent, in order to select the largest among the detected U values.

In Figure 2, for exemplifying purposes a practical embodiment of a flowmeter according to the invention is shown, which consists of an individual rectilinear pipe 65, through which the fluid flows in the direction of the arrows 1, and is made oscillate at the frequency corresponding to the frequency of resonance with its second harmonic 3 (see specifically Figure 8), by the impulse-force-generating electromagnet 9 acting on the middle of the pipe.

Such a flowmeter, whose advantages are clearly evident, both from the viewpoint of minimizing the pressure drops, and from the viewpoint of minimizing the costs and the structural complications, in particular as relates to the problems of centering and alignment, is provided, besides the true oscillating pipe 65, with a second pipe 66, external to, and coaxial with, pipe 65, which performs the double task of connecting the two connection flanges 67 and 68 and of supporting the impulse-force-generating electromagnet 9 and the two electromagnetic brakes 15 and 16, respectively equipped with the B motion sensor, 17, and with the A motion sensor, 18, both of which have the same structure, and the same function, as of the corresponding sensors as used for the portal-shaped pipe 4.

Then, in as much as this flowmeter type is particularly indicated for large-size pipes, wherein the necessary impulse-force-generating power may become considerable, according to the present invention a contrivance was found, which is suitable for considerably reducing said power, and the corresponding dimensions of the impulse-force-generating electromagnet.

Said contrivance consists in connecting the external pipe 66 to the internal pipe 65 in a point lined up with the axis of the impulse-force-generating electromagnet 9, by means of an elastic metal membrane 69, i.e., by means of an elastic component, which is capable of increasing the overall elastic constant of the system formed by the pipe and its constraints, such to increase the value of the resonance frequency with the first harmonic (equivalent to the flexural resonance oscillation). In fact, in as much as this additional contrivance is positioned exactly in the middle of the pipe, and, hence, in correspondence of the node 70 (see Figure 8) of the resonance oscillation of the second harmonic (equivalent to the twisting resonance oscillation), its presence does not lead to any changes in the resonance frequency of this second harmonic, although it modifies the first harmonic thereof. On the other hand, by suitably selecting this additional elastic constant, it is possible to cloesely approach the resonance frequency of the first vibrational mode (the first harmonic) of the pipe to the resonance frequency of the second vibrational mode (the second harmonic), so that, with the control of the motion being still carried out in such a way as to perform the search for the resonance frequency corresponding to the second harmonic, the necessary impulse-force-generating power will be much lower, because the pipe already oscillates at a frequency in the nearby of its own frequency of spontaneous resonance (the flexural resonance frequency) corresponding to the first harmonic.

Finally, a further advantage of this form of practical embodiment with a rectilinear oscillating pipe is given by the fact that the flowmeter can be made immune from the seismic disturbances, with no need for elastic supports, because the instrument can be supported by the same connection flanges 67 and 68, with which it does not interact, on condition that it has been so dimensioned, that the external pipe oscillates in the opposite direction as compared to the inner pipe, with no flange rotation. To this end, it is enough that the stiffness of the internal oscillating pipe, and the stiffness of the external support pipe, to which the magnetic brakes and the impulse-force-generating electromagnetic are fastened, are, relatively to each other, in a ratio proportional to the ratio of their respective masses.

In this way, in fact, by making the system forcedly oscillate at a frequency higher than the own resonance frequency of each of said two pipes, the oscillations of said two pipes shall take place in mutual opposition of phase, and hence with zero rotation of the flanges, in as much as on them the flexural torques of the two systems are equal to each other, and mutually annihilate; furthermore, the barycentre of the system, due to the fact that the two masses move in mutual opposition of phase, practically remains stationary, hence, with the result that no interactions exist with the external environment. The limit of this configuration is however given by the need of matching the external mass to the mass of the fluid under measurement, so that, when this latter changes to a considerable extent, restrictions must be provided for in the geometries, and in the supports for the pipes entering the system such to render repetitive and controlled the interactions, in as much as also they become to form a part of the oscillating system.

But, by simply doubling the pipe and the tube, and causing them to oscillate in opposition of phase, always at a frequency coincident with the second harmonic, and therefore consequently increasing the costs and the structural complexity, is anyway possible to obtain a measurement system which is practically insensitive both to the changes in the mass of fluid, and to the geometry of the connection pipes.

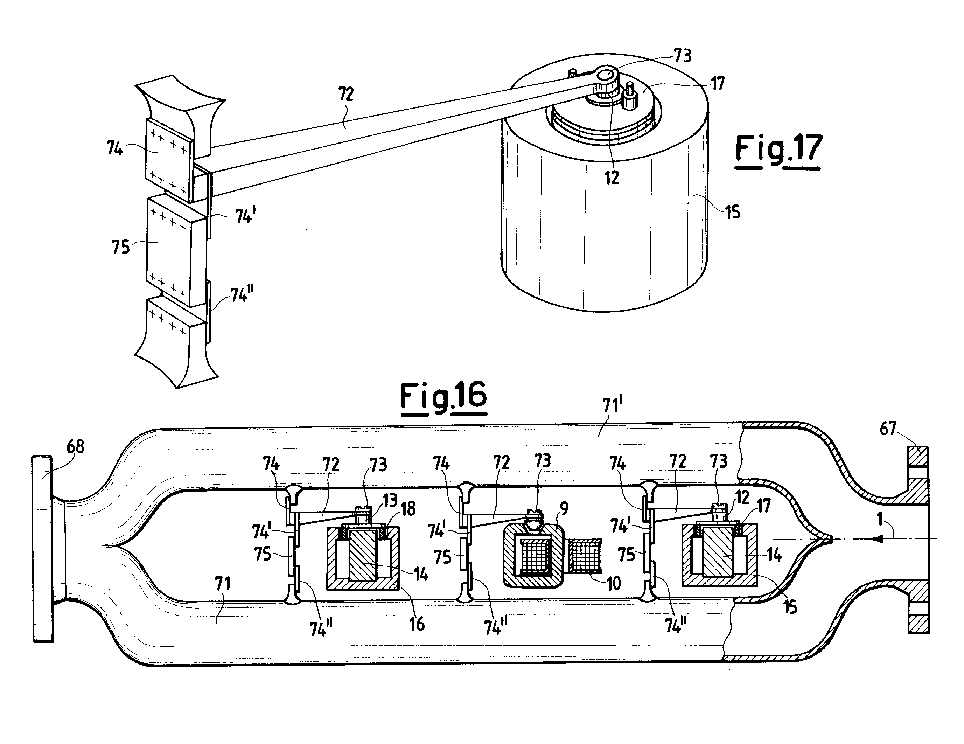

In Figure 16, a further type of flowmeter, also according to the invention, is shown, which shows such a double rectilinear pipe 71 and 71′, and which adopts an original solution for the assemblage of both the magnetic brakes 15 and 16, and the impulse-force-generating electromagnet 9.

This assemblage solution makes it possible the double outcome to be obtained, of reducing the overall dimensions, with the action being the same, of both the sensor-brake assemblies, and of the exciter, or impulse-force-generating, electromagnet, by increasing their lever arm, as well as of lightening the moving parts, in that the above-said magnetic elements are rendered stationary, and not connected to an oscillating support.

Summarizing, the support device for each one of the above-said three magnetic units substantially consists in a lever 72 (see also Figure 17), connected at an end 73 to the movable member of the electromagnet, or of the brakes, and, at its other end, with the upper pipe 71′ and with the lower pipe 71, respectively through the elastic blade 74 and the two elastic blades 74′ and 74″, connected to one another by a stiffening plate 75, with the two sets of blades 74 and (74′, 74″) being located very close to each other.

The amplification of the motion and of the forces results thus to be proportional to the ratio of the length of the lever 72, to the distance between the two sets of elastic blades, which also perform the function of supporting the same lever, whilst the stationary bodies of the brakes 15 and 16, and of the electromagnet 9 can be mounted on a separate stationary support.

By means of this system, it is easily possible to achieve a 100× amplification, and, consequently, a considerable reduction, with the action being the same, in the dimensions of the above said magnetic units.

## Claims

1. A method of measuring the mass flow rate of a fluid by use of the Coriolis force, comprising:
   - passing said fluid through at least one pipe, which is fastened at its ends to a support,
   - oscillating said pipe substantially at its resonant frequency of twisting vibration by means of electromagnetic force-generating means at a point midway along its length,
   - sensing displacements of said pipe using respective sensing means, spaced on either side of

EP 0 272 758 B1

electromagnetic means between said means and the ends of the pipe, to develop sensing signals whose amplitudes represent the respective displacements, and

- deriving a difference signal representing the difference between said sensing signals and using it to determine the twisting moment caused by Coriolis forces acting on said pipe and the flowing fluid therein, in order to provide an output signal representative of the mass flow of said fluid through said pipe, wherein
- the difference signal is used to control the signal applied to the electromagnetic force-generating means,

characterised by:

- applying said difference signal to a filter circuit to provide an average thereof over a certain time interval and thereby remove disturbances due to supply variations, seismic disturbances, or misalignment of the apparatus,
- searching for, and maintaining, said twisting resonance frequency, by varying the oscillation frequency in steps and detecting the maximum value of the average difference signal occuring during said variation,
- applying a braking force to the pipe at the locations of said sensing means in proportion to the speed at which the pipe is being displaced and with an intensity which is larger the Coriolis force.

2. A method according to claim 1 wherein said braking action is more powerful at one of the locations than at the other, said output signal being compensated to allow for said differential braking action.

3. A flowmeter operating using the Coriolis force in accordance with the method of claim 1 or 2, comprising
   - at least one pipe (4) though which the fluid is passed, said pipe being fixed at its ends to a support member (7),
   - an electromagnet (9) arranged to oscillate said pipe at a point midway along its length,
   - two sensors (17,18) located at positions between said electromagnet and the ends of said pipe and arranged to sense displacements of said pipe and to develop signals representing the respective displacements,
   - a processing circuit operating on a difference signal representing the difference between the sensor signals and using it to determine the twisting moment caused by Coriolis forces acting on said pipe and the flowing fluid therein, in order to provide an output signal representative of the mass flow of said fluid through said pipe, and to control the signal applied to the electromagnetic force-generating means,

   characterised in that:
   - said processing means comprises
   - a filter circuit (28, 29) to which said difference signal is applied to provide an average thereof over a certain time interval and thereby remove disturbances due to supply variations, seismic disturbances, or misalignment of the apparatus, said filter circuit also providing an average of a signal representing the sum of the sensing signals, and
   - means (76, 50, 52, 54, 32, 42,) for searching for, and maintaining, said twisting resonance frequency, by varying the oscillation frequency in steps and detecting the maximum value of the average difference signal occuring during said variation,

   and in that said flowmeter also comprises
   - electromagnetic braking means (14,15,16,17) including coils fixed to said support member and arranged to apply a braking force to the pipe at the locations of said sensing means in proportion to the speed at which the pipe is being displaced and with an intensity which is larger than the Coriolis force, said braking action being more powerful at one of the locations than at the other, and said means for processing including means for compensating said output signal to allow for said differential braking action.

4. A flowmeter according to claim 3 wherein the pipe is substantially of portal shape, i.e. having an upper horizontal central section joined to two vertical sections, the bottom or free ends of said vertical sections being joined to horizontal input and output pipe sections, the latter sections are fixed to shoulders of said support member, the support member is a generally vertical plate which is mounted via elastic members (21) to a base, and the braking means are located at the upper angles of the portal i.e. at the junctions between the upper horizontal section of the pipe with the vertical sections.

17

**5.** A flowmeter according to claim 3 wherein the pipe is rectilinear and is connected to said support member by connection flanges.

**6.** A flowmeter according to claim 3 wherein there are two rectilinear pipes and the electromagnet and braking means act on both pipes.

**7.** Measurement instrument, or flowmeter, according to claim 6, characterized in that said impulse-force-generating electromagnet, and the movable coils of the above said two magnetic brakes are applied between said two pipes, each one of them being respectively applied by means of a lever linked at an end to the movable member of said impulse-force-generating electromagnet, or to the coils of said magnetic brakes, and, at its other end, to two elastic metal blades located very close to each other on the end of the lever, and respectively fastened to the two rectilinear pipes.

**8.** Measurement instrument, or flowmeter, according to claim 3 or 4 or 6, characterized in that the oscillation of the pipe, or of the pipes, is obtained by means of two impulse-force-generating electromagnets acting with equal forces in correspondence of said points of application of said magnetic brakes.

**9.** Measurement instrument, or flowmeter, according to claim 3 or 4 or 6, characterized in that said shift-detecting sensors are speed sensors conglobated in said electromagnetic brakes.

**10.** Measurement instrument, or flowmeter, according to claim 3 or 4 or 6, characterized in that the above said filtering means essentially consist of an analog integrator, at the input of which said sum signal and said difference signal relating to said shifts are sent, after these signals being cyclically multiplied by the sequence of values 1; 0,5; -0,5; -1; -0,5; 0,5, on command by a sequencer which provides for the synchronization and for the timing of the duration of the integration.

**11.** Measurement instrument, or flowmeter, according to Claims 3 or 4 or 6 and 10, characterized in that the above said means for searching for, and maintaining said twisting resonance frequency at constant flow rate substantially consist of two storage devices, wherein the results are stored, of two successive integrations of said analog integrator, through a switch governed by said sequencer, the outputs of said storage devices being sent to a difference node, which is connected with an adapter multiplier by a prefixed constant, in its turn connected with an analog storage device, wherein it accumulates its output value only at the end of every group of integration periods constituted by two periods of integration on command by the said sequencer, which also governs a generator of disturbances, to deliver, every second period, a small analog signal ($\delta f$) to an addition node, to which also the output of said analog storage device comes, whilst the output from said addition node is connected with a voltage-frequency converter, whose output is sent to a PID unit, to modulate in frequency the constant-amplitude signal which governs the excitation circuit of said impulse-force-generating electromagnet, as well as to the said sequencer for the basic synchronization.

**12.** Measurement instrument, or flowmeter, according to claims 3 or 4 or 6 and 11, characterized in that the above said means for searching for, and maintaining the above said frequency of twisting resonance at a variable flow rate, substantially consist of three storage devices, wherein the results are stored, of three successive integrations of said analog integrator, through a switch governed by said sequencer, the outputs from the two storage devices containing the first and the third integrated value being sent to an addition node connected with a divider by two, in its turn connected with the said difference node of claim 11, which is connected with the same elements as indicated in said claim 11, with the only variant that now cycles consisting of three period of integration are taken into consideration, and hence said generator of disturbances sends an analog signal ($\delta f$) always and only during the second period of said three periods.

**13.** Measurement instrument, or flowmeter, according to claim 3 or 4 or 6 and 11 or 12, characterized in that said means for selecting the maximum output consist of a selector of maximum, to whose input the outputs from said storage devices are sent.

**14.** Measurement instrument, or flowmeter, according to the preceding claims, characterized in that said means for compensating for the differential action of said magnetic brakes consist of a difference node,

18

EP 0 272 758 B1

to which the output from said selector of maximum, and the output from a signal generator are respectively sent.

**Revendications**

1. Procédé pour mesurer le débit d'écoulement massique d'un fluide grâce à l'utilisation de la force de Coriolis, comportant :
   - le passage dudit fluide dans au moins un premier tuyau, qui est fixé à ses extrémités sur un support,
   - l'oscillation dudit tuyau substantiellement à sa fréquence de résonance par des vibrations de torsion grâce à des moyens de génération de forces électromagnétiques en un point situé à mi-chemin le long de sa longueur,
   - des déplacements de détection dudit tuyau en utilisant des moyens de détection respectifs, espacés sur chaque côté des moyens électromagnétiques entre lesdits moyens et les extrémités du tuyau, de façon à développer des signaux de détection dont les amplitudes représentent les déplacements respectifs, et
   - l'extraction d'un signal de différence représentant la différence entre lesdits signaux de détection et son utilisation pour déterminer le moment de torsion provoqué par les forces de Coriolis agissant sur ledit tuyau et le fluide s'écoulant à l'intérieur de celui-ci, afin de délivrer un signal de sortie représentatif de l'écoulement massique dudit fluide à travers ledit tuyau, dans lequel
   - le signal de différence est utilisé pour contrôler le signal appliqué aux moyens de génération de forces électromagnétiques,
   caractérisé par :
   - l'application dudit signal de différence à un circuit de filtre afin de déliver une moyenne de celui-ci pendant un certain intervalle de temps, et de retirer par conséquent les perturbations dues aux variations de l'alimentation, aux perturbations sismiques, ou au mauvais alignement de l'appareil,
   - la recherche et le maintien de ladite fréquence de résonance de torsion, en faisant varier la fréquence d'oscillation par étapes et en détectant la valeur maximale du signal de différence moyen se produisant durant ladite variation,
   - l'application d'une force de freinage au tuyau aux emplacements desdits moyens de détection proportionnellement à la vitesse à laquelle le tuyau est déplacé et avec une intensité qui est supérieure à la force de Coriolis.

2. Procédé selon la revendication 1, dans lequel ladite action de freinage est plus puissante à un des emplacements qu'à l'autre, ledit signal de sortie étant compensé de façon à permettre ladite action de freinage différentielle.

3. Débitmètre fonctionnant en utilisant la force de Coriolis selon le procédé de la revendication 1 ou 2, comportant :
   - au moins un premier tuyau (4) à travers lequel passe le fluide, ledit tuyau étant fixé à ses extrémités à un élément de support (7),
   - un électro-aimant (9) disposé de façon à faire osciller ledit tuyau en un point situé à mi-chemin le long de sa longueur,
   - deux détecteurs (17, 18) disposés en des positions situées entre l'électro-aimant et les extrémités dudit tuyau et disposés de façon à détecter les déplacements dudit tuyau et à développer des signaux représentant les déplacements respectifs,
   - un circuit de traitement fonctionnant avec un signal de différence présentant la différence entre les signaux de détecteur et l'utilisant pour déterminer le moment de torsion provoqué par les forces de Coriolis agissant sur ledit tuyau et le fluide circulant à l'intérieur de celui-ci, afin de délivrer un signal de sortie représentatif de l'écoulement massique dudit fluide à travers ledit tuyau, et de contrôler le signal appliqué aux moyens de génération de forces électromagnétiques,
      caractérisé en ce que :
      lesdits moyens de traitement comportent
   - un circuit de filtre (28, 29) auquel est appliqué ledit signal de différence de façon à délivrer une moyenne de celui-ci sur un certain intervalle de temps, et à éliminer par conséquent des perturbations dues aux variations d'alimentation, aux perturbations sismiques, ou au mauvais alignement de l'appareil, ledit circuit de filtre délivrant également une moyenne d'un signal représentant la somme des signaux de détection, et

19

- des moyens (76, 50, 52, 54, 32, 42) pour rechercher et maintenir ladite fréquence de résonance de torsion en faisant varier la fréquence d'oscillation par étapes et en détectant la valeur maximale du signal de différence moyen se produisant durant ladite variation,
et en ce que ledit débitmètre comporte également
- des moyens de freinage électromagnétiques (14, 15, 16, 17) comprenant des enroulements fixés audit élément de support et disposés de façon à appliquer une force de freinage au tuyau en des emplacements desdits moyens de détection, proportionnellement à la vitesse à laquelle le tuyau est déplacé et avec une intensité qui est supérieure à la force de Coriolis, ladite action de freinage étant plus puissante à l'un des emplacements qu'à l'autre, et lesdits moyens pour le traitement comprenant des moyens pour compenser ledit signal de sortie afin de permettre ladite action de freinage différentielle.

4. Débitmètre selon la revendication 3, dans lequel le tuyau est substantiellement en forme de portail, c'est-à-dire qu'il a une section centrale horizontale supérieure réunie à deux sections verticales, les extrémités intérieures ou extrémités libres desdites sections verticales étant réunies aux sections de tuyau d'entrée et de sortie horizontales, ces dernières sections étant fixées à des épaulements dudit élément de support, l'élément de support étant une plaque globalement verticale qui est montée par l'intermédiaire d'éléments élastiques (21) à une base, et les moyens de freinage étant situés aux angles supérieurs du portail, c'est-à-dire aux jonctions entre la section horizontale supérieure du tuyau avec les sections verticales.

5. Débitmètre selon la revendication 3, dans lequel le tuyau est rectiligne et est connecté audit élément de support par des flasques de connexion.

6. Débitmètre selon la revendication 3, dans lequel se trouvent deux tuyaux rectilignes et dans lequel l'électro-aimant et les moyens de freinage agissent sur les deux tuyaux.

7. Instrument de mesure, ou débitmètre, selon la revendication 6, caractérisé en ce que ledit électro-aimant générant une force d'impulsion, et les enroulements mobiles desdits deux freins magnétiques ci-dessus, sont appliqués entre lesdits deux tuyaux, chacun d'entre eux étant respectivement soumis au moyen d'un levier relié à une extrémité à l'élément mobile dudit électro-aimant générant une force d'impulsion, ou aux enroulements desdits freins magnétiques, et, à son autre extrémité, aux deux lames métalliques élastiques situées très près l'une de l'autre sur l'extrémité du levier, et respectivement fixées aux deux tuyaux rectilignes.

8. Instrument de mesure, ou débitmètre, selon la revendication 3, 4 ou 6, caractérisé en ce que l'oscillation du tuyau, ou des tuyaux, est obtenue au moyen de deux électro-aimants générant une force d'impulsion agissant avec des forces égales en correspondance avec lesdits points d'application desdits freins magnétiques.

9. Instrument de mesure, ou débitmètre, selon la revendication 3, 4 ou 6, caractérisé en ce que lesdits détecteurs de déplacement sont des détecteurs de vitesse englobés dans lesdits freins électromagnétiques.

10. Instrument de mesure, ou débitmètre, selon la revendication 3, 4 ou 6, caractérisé en ce que lesdits moyens de filtrage ci-dessus se composent essentiellement d'un intégrateur analogique, à l'entrée duquel ledit signal de somme et ledit signal de différence concernant lesdits déplacements sont envoyés, après que ces signaux aient été multipliés cycliquement par la séquence de valeur 1; 0.5; -0,5; -1; -0,5; 0,5, sur la commande d'un séquenceur qui assure la synchronisation et le minutage de la durée de l'intégration.

11. Instrument de mesure, ou débitmètre, selon les revendications 3 ou 4 ou 6, et 10, caractérisé en ce que lesdits moyens ci-dessus pour chercher et maintenir ladite fréquence de résonance de torsion à un débit d'écoulement constant, se composent substantiellement de deux dispositifs de mémorisation, dans lesquels les résultats sont mémorisés, de deux intégrations successives dudit intégrateur analogique, par l'intermédiaire d'un commutateur gouverné par ledit séquenceur, les sorties desdits dispositifs de mémorisation étant envoyées à un noeud de différence, qui est connecté à un multiplicateur adaptateur par une constante préfixée, connectée à son tour à un dispositif de mémorisation analogique, dans lequel il accumule sa valeur de sortie uniquement à la fin de chaque groupe de périodes d'intégration constitué par deux périodes d'intégration à la commande dudit séquenceur, qui gouverne également un générateur de perturbations, afin de délivrer, lors d'une période sur deux, un signal analogique faible ($\delta f$) à un noeud d'addition, auquel arrive également la sortie dudit dispositif de mémorisation analogique, tandis que la sortie dudit noeud d'addition est connectée à un convertisseur tensionfréquence dont la sortie est envoyée à une unité PID, afin de moduler en fréquence le signal d'amplitude constante qui gouverne le circuit d'excitation dudit électro-aimant de génération de force d'impulsion, et également audit séquenceur pour la synchronisation de base.

12. Instrument de mesure, ou débitmètre, selon les revendications 3 ou 4 ou 6, et 11, caractérisé en ce que lesdits moyens ci-dessus pour chercher et maintenir ladite fréquence de résonance de torsion ci-dessus à un débit d'écoulement variable, se composent substantiellement de trois dispositifs de mémorisation, dans lesquels les résultats sont mémorisés, de trois intégrations successives dudit intégrateur analogique, par l'intermédiaire d'un commutateur gouverné par ledit séquenceur, les sorties de deux dispositifs de mémorisation contenant la première et la troisième valeurs intégrées envoyées à un noeud d'addition connecté à un diviseur par deux, à son tour connecté audit noeud de différence de la revendication 11, qui est connecté aux mêmes éléments que ceux indiqués dans ladite revendication 11, la seule variante étant que, à présent, les cycles composés de trois périodes d'intégration sont pris en considération, et, par conséquent, ledit générateur de perturbations envoie un signal analogique ($\delta f$) toujours et seulement durant la deuxième période desdites trois périodes.

13. Instrument de mesure, ou débitmètre, selon les revendications 3 ou 4 ou 6 et 11 ou 12, caractérisé en ce que lesdits moyens pour sélectionner la sortie maximale se composent au maximum d'un sélecteur, sur les entrées duquel on envoie les sorties desdits dispositifs de mémorisation.

14. Instrument de mesure, ou débitmètre, selon les revendications précédentes, caractérisé en ce que lesdits moyens pour compenser l'action différentielle desdits freins magnétiques se composent d'un noeud de différence, auquel la sortie dudit sélecteur de maximum et la sortie d'un générateur de signaux sont respectivement envoyées.

**Patentansprüche**

1. Verfahren zum Messen des Massendurchsatzes eines Fluids unter Verwendung der Corioliskraft, umfassend:

- Durchleiten des Fluids durch zumindest ein Rohr, das an seinen Enden an einem Träger befestigt ist,
- Versetzen des Rohres in Schwingung bei im wesentlichen seiner Verwindungsresonanzfrequenz mit Hilfe einer elektromagnetischen Krafterzeugungseinrichtung an einem Punkt in der Mitte seiner Länge,
- Erfassen der Ortsänderungen des Rohres unter Verwendung von Sensormitteln, die in einem Abstand von den beiden Seiten der elektromagnetischen Mittel zwischen diesen Mitteln und den Enden des Rohres jeweils angeordnet sind, um Meßsignale zu entwickeln, deren Amplituden die jeweiligen Ortsänderungen darstellen, und
- Ableiten eines Differenzsignales, das die Differenz zwischen den Meßsignalen darstellt, und Verwenden dieses Signales, um das Verwindungsmoment zu bestimmen, das durch die auf das Rohr und das darin strömende Fluid wirkenden Corioliskräfte erzeugt wird, um ein Ausgangssignal zu erzeugen, das für den Massendurchsatz des Fluids durch das Rohr repräsentativ ist, wobei
- das Differenzsignal dazu verwendet wird, das Signal zu steuern, welches an die elektromagnetischen Krafterzeugungsmittel angelegt wird, gekennzeichnet durch:
- Anlegen des Differenzsignales an einen Filterschaltkreis, um davon einen Mittelwert über ein bestimmtes Zeitintervall zu bilden und dadurch Störungen zu entfernen, die von Versorgungsänderungen, seismischen Störungen oder Fehlausrichtungen der Vorrichtung herrühren,
- Suchen und Aufrechterhalten der Verwindungsresonanzfrequenz durch Verändern der Schwingungsfrequenz in Schritten und Erfassen des Maximalwertes des gemittelten Differenzsignales, das während dieses Veränderns auftritt,
- Aufbringen einer Bremskraft auf das Rohr an den Orten der Sensormittel proportional zu der Geschwindigkeit, mit der das Rohr seinen Ort ändert, und mit einer Intensität, die größer ist als die Corioliskraft.

**2.** Verfahren nach Anspruch 1, bei welchem die Bremswirkung an einem der Orte stärker ist als an dem anderen, wobei das Ausgangssignal kompensiert wird, um diese Differentialbremswirkung zu ermöglichen.

**3.** Durchflußmesser, der unter Verwendung der Corioliskraft gemäß dem Verfahren nach Anspruch 1 oder 2 arbeitet, mit
- zumindest einem Rohr (4), durch welches das Fluid geleitet wird, wobei das Rohr an seinen Enden an einem Tragteil (7) befestigt ist,
- einem Elektromagnet (9), der so angeordnet ist, daß er das Rohr an einem Punkt in der Mitte seiner Länge in Schwingung versetzt,
- zwei Sensoren (17, 18), die an Orten zwischen dem Elektromagnet und den Enden des Rohres angeordnet sind und Ortsänderungen des Rohres erfassen, um Signale zu entwickeln, welche die jeweiligen Ortsänderungen darstellen,
- einem Verarbeitungsschaltkreis, der mit einem Differenzsignal arbeitet, welches die Differenz zwischen den Sensorsignalen darstellt, und es verwendet, um das Verwindungsmoment zu bestimmen, das durch die auf das Rohr und das darin strömende Fluid wirkenden Corioliskräfte erzeugt wird, um ein Ausgangssignal zu erzeugen, welches für den Massendurchsatz des Fluids durch das Rohr repräsentativ ist, und um das an die elektromagnetischen Krafterzeugungsmittel angelegte Signal zu steuern,
    dadurch gekennzeichnet, daß:
- die Verarbeitungsmittel aufweisen
- einen Filterschaltkreis (28, 29), dem das Differenzsignal zugeführt ist, um davon einen Mittelwert über ein bestimmtes Zeitintervall zu bilden und dadurch Störungen zu entfernen, die von Versorgungsänderungen, seismischen Störungen oder Fehlausrichtungen der Vorrichtung herrühren, wobei der Filterschaltkreis auch einen Mittelwert eines Signales liefert, das die Summe der Sensorsignale darstellt, und
- Mittel (76, 50, 52, 54, 32, 42) zum Suchen und Aufrechterhalten der Verwindungsresonanzfrequenz durch Verändern der Schwingungsfrequenz in Schritten und Erfassen des Maximalwertes des gemittelten Differenzsignales, das während dieses Veränderns auftritt,
    und daß der Durchflußmesser ferner aufweist
- elektromagnetische Bremsmittel (14, 15, 16, 17), die Spulen beinhalten, welche am Tragteil befestigt und so angeordnet sind, daß sie eine Bremskraft auf das Rohr an den Orten der Sensormittel proportional zu der Geschwindigkeit, mit der das Rohr seinen Ort ändert, und mit einer Intensität aufbringen, die größer ist als die Corioliskraft, wobei die Bremswirkung an einem der Orte stärker ist als an dem anderen, und wobei die Verarbeitungsmittel Mittel zum Kompensieren des Ausgangssignales aufweisen, um diese Differenzbremswirkung zu ermöglichen.

**4.** Durchflußmesser nach Anspruch 3, bei welchem das Rohr im wesentlichen die Form eines Portales hat, d.h. einen oberen horizontalen Mittelabschnitt hat, der mit zwei vertikalen Abschnitten verbunden ist, deren untere bzw. freie Enden an horizontale Einlaß- und Auslaßrohrabschnitte angeschlossen sind, welche an Schultern des Tragteiles befestigt sind, wobei der Tragteil eine im allgemeinen vertikale Platte ist, die über einen elastischen Teil (21) auf einer Basis montiert ist, und wobei die Bremsmittel in den oberen Ecken des Portales, d.h. an den Verbindungsstellen des oberen horizontalen Abschnittes des Rohres mit den vertikalen Abschnitten, angeordnet sind.

**5.** Durchflußmesser nach Anspruch 3, bei welchem das Rohr geradlinig und am Tragteil über Verbindungsflansche befestigt ist.

**6.** Durchflußmesser nach Anspruch 3, bei welchem zwei geradlinige Rohre vorhanden sind, und die elektromagnetischen Mittel und die Bremsmittel auf beide Rohre wirken.

**7.** Meßinstrument oder Durchflußmesser nach Anspruch 6, dadurch gekennzeichnet, daß der impulskrafterzeugende Elektromagnet und die beweglichen Spulen der beiden obigen magnetischen Bremsen zwischen den beiden Rohren angeordnet sind, wobei jede(r) von ihnen jeweils mit Hilfe eines Armes angebracht ist, der an einem Ende mit dem beweglichen Teil des impulskrafterzeugenden Elektromagnetes bzw. den Spulen der Magnetbremsen und an seinem anderen Ende mit zwei elastischen

EP 0 272 758 B1

Metallklingen verbunden ist, die am Ende des Armes sehr nahe beieinanderliegend angeordnet und jeweils an einem der beiden geradlinigen Rohre befestigt sind.

8. Meßinstrument oder Durchflußmesser nach Anspruch 3 oder 4 oder 6, dadurch gekennzeichnet, daß die Schwingung des Rohres bzw. der Rohre mit Hilfe von zwei impulskrafterzeugenden Elektromagneten erzielt wird, die mit gleichen Kräften bezüglich der beiden Wirkpunkte der Magnetbremsen wirken.

9. Meßinstrument oder Durchflußmesser nach Anspruch 3 oder 4 oder 6, dadurch gekennzeichnet, daß die Ortsänderungssensoren Geschwindigkeitssensoren sind, die in den Elektromagnetbremsen integriert sind.

10. Meßinstrument oder Durchflußmesser nach Anspruch 3 oder 4 oder 6, dadurch gekennzeichnet, daß die obigen Filtermittel im wesentlichen aus einem analogen Integrator bestehen, an dessen Eingang das Summensignal und das Differenzsignal der Ortsänderungen geschickt werden, nachdem diese Signale zyklisch mit der Abfolge der Werte 1; 0,5; -0,5; -1; -0,5; 0,5 multipliziert worden sind, u.zw. auf Befehl eines Sequenzers, der die Synchronisierung und den Takt für die Integrationszeit vorgibt.

11. Meßinstrument oder Durchflußmesser nach Anspruch 3 oder 4 oder 6 und 10, dadurch gekennzeichnet, daß die obigen Mittel zum Suchen und Aufrechterhalten der Verwindungsresonanzfrequenz bei konstantem Durchsatz im wesentlichen aus zwei Speichereinrichtungen bestehen, in denen die Ergebnisse zweier aufeinanderfolgender Integrationen des analogen Integrators über einen vom Sequenzer gesteuerten Schalter gespeichert werden, wobei die Ausgänge der Speichereinrichtungen an einen Differenzknoten geführt sind, welcher mit einem Anpassungsmultiplizierer verbunden ist, der mit einer vorgegebenen Konstante multipliziert und seinerseits an eine Analogspeichereinrichtung angeschlossen ist, in welcher er seinen Ausgangswert nur am Ende jeder Gruppe von Integrationsperioden akkumuliert, die durch zwei Perioden von Integrationen auf Befehl des Sequenzers gebildet ist, welcher ferner einen Störgenerator steuert, um jede zweite Periode ein kleines Analogsignal ($\delta f$) an einen Additionsknoten abzugeben, an den ferner der Ausgang der Analogspeichereinrichtung geführt ist, wobei der Ausgang dieses Additionsknotens mit einem Spannungs/ Frequenz-Wandler verbunden ist, dessen Ausgang an eine PID-Einheit geführt ist, um das den Anregungsschaltkreis des impulskrafterzeugenden Elektromagneten steuernde Konstantamplitudensignal in der Frequenz zu modulieren, sowie an den Sequenzer zur Basissynchronisation geführt ist.

12. Meßinstrument oder Durchflußmesser nach Anspruch 3 oder 4 oder 6 und 11, dadurch gekennzeichnet, daß die obigen Mittel zum Suchen und Aufrechterhalten der Verwindungsresonanzfrequenz bei variablem Durchsatz im wesentlichen aus drei Speichereinrichtungen bestehen, in denen die Ergebnisse dreier aufeinanderfolgender Integrationen des analogen Integrators über einen vom Sequenzer gesteuerten Schalter gespeichert werden, wobei die Ausgänge der beiden Speichereinrichtungen, die den ersten und den dritten integrierten Wert enthalten, an einen Additionsknoten geführt sind, welcher mit einem Dividiert-durchzwei-Teiler verbunden ist, der seinerseits mit dem Differenzknoten aus Anspruch 11 verbunden ist, welcher mit denselben Elementen wie in Anspruch 11 angegeben verbunden ist, mit dem einzigen Unterschied, daß nun Zyklen aus drei Integrationsperioden berücksichtigt werden, und folglich der Störgenerator ein Analogsignal ($\delta f$) immer und nur während der zweiten Periode der drei Perioden sendet.

13. Meßinstrument oder Durchflußmesser nach Anspruch 3 oder 4 oder 6 und 11 oder 12, dadurch gekennzeichnet, daß die Mittel zum Auswählen des maximalen Ausgangs aus einem Maximumwähler bestehen, an dessen Eingang die Ausgänge der Speichereinrichtungen geführt sind.

14. Meßinstrument oder Durchflußmesser nach den vorhergehenden Ansprüchen, dadurch gekennzeichnet, daß die Mittel zum Kompensieren der Differenzwirkung der Magnetbremsen aus einem Differenzknoten bestehen, an den der Ausgang des Maximumwählers und der Ausgang eines Signalgenerators geführt sind.

23

**Fig.1**

**Fig.2**

## Fig.3

A−B

A

A

A+B

B

4

4

## Fig.4

A

B

4

4

## Fig.5

KfB  KtB  MB+m

15

N
S

KfA

KtA  MA+m

N
S

FB  CB  GB

## Fig.6

FA  CA  GA

16  z

x

R  y

CB

4

CA

x

1

1

## Fig.7

R  MA+m  CB  v

CA  MB+m

KtB

KtA  F  KfB

v  zB

KfA

y

1

zA

## Fig.8

2

70

CA

3  70

CB

1

65

## Fig.8

EP 0 272 758 B1

Fig.10

Fig.9

26

Fig.11

Fig.13

Fig.12

**Fig.15**

**Fig.14**

28

**Fig.17**

**Fig.16**

EP 0 272 758 B1